# EUROPEAN PATENT APPLICATION

(11) **EP 4 302 932 A1**
(43) Date of publication of application: **10.01.2024**
(21) Application number: 22183089.6
(22) Date of filing: 05.07.2022
(51) Int. Cl.: B25J 9/12, B25J 13/08, B25J 17/02, B25J 9/16

(54) **CONTROL METHOD FOR A ROBOT**

(71) Applicant: Kassow Robots ApS, 2770 Kastrup (DK)
(72) Inventor: KASSOW, Kristian, 2300 Copenhagen S (DK)
(74) Representative: COPA Copenhagen Patents

(57) **Abstract**

The present disclosure relates to a robot and a method for controlling such robot. The robot comprising a plurality of joint assemblies including a first joint assembly and a second joint assembly, the robot further comprises a plurality of motors including a first primary motor and a second primary motor. The robot comprising a power bus supplying power to the first primary motor and the second primary motor. The robot is controlled to operate the plurality of motors to effectuate a desired movement of the robot, and to control operation of the plurality of motors based on the information about the state of power on the power bus.

## Description

The present disclosure relates to a robot, e.g. a robotic arm and/or a joint assembly for such robot or robotic arm. More particularly the present disclosure relates to control of such robot.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is important to be able to reduce movement of joints, e.g. during dynamic movements some joints of the robot needs to cause a braking action of a movement in order for the robot to move as desired. Braking such movement generates energy, which must be handled to avoid malfunction of the robot and/or components of the robot.

### SUMMARY

It is an object of the present disclosure to at least provide improvements of the prior art and/or to solve or reduce problems known from the prior art. further object of the present disclosure to provide an advantageous or at least alternative robot, robotic joint, robotic joint assembly and/or method for controlling a robot, robotic joint and/or robotic joint assembly.

Thus, the present disclosure relates to a robot comprising at least one joint assembly and an associated method for controlling such robot.

Accordingly, a robot and a method for controlling a robot are disclosed.

The robot comprises one or more or a plurality of joint assemblies, e.g. including a first joint assembly and a second joint assembly. The robot further comprises a plurality of motors, e.g. including a first primary motor, a first secondary motor, a second primary motor, and/or a second secondary motor. The plurality of motors may be at least six motors, such as seven motors.

Each of the plurality of joint assemblies may comprise a joint housing and a primary motor connecting the joint housing with a primary link. The primary motor may be adapted to rotate the primary link relative to the joint housing around a primary axis. A joint assembly may further comprise a secondary motor connecting the joint housing with a secondary link. The secondary motor may be adapted to rotate the secondary link relative to the joint housing around a secondary axis. The secondary axis may be non-parallel with the primary axis.

The first joint assembly comprises a first joint housing and the first primary motor. The first primary motor connects the first joint housing with a first primary link. The first primary motor is adapted to rotate the first primary link relative to the first joint housing around a first primary axis. The first joint assembly may comprise a first secondary motor. The first secondary motor may connect the first joint housing with a first secondary link. The first secondary motor may be adapted to rotate the first secondary link relative to the first joint housing around a first secondary axis. The first secondary axis may be non-parallel with the first primary axis.

The second joint assembly may comprise a second joint housing and the second primary motor. The second primary motor may connect the second joint housing with a second primary link. The second primary motor may be adapted to rotate the second primary link relative to the second joint housing around a second primary axis. The second joint assembly may comprise the second secondary motor. The second secondary motor may connect the second joint housing with a second secondary link. The second secondary motor may be adapted to rotate the second secondary link relative to the second joint housing around a second secondary axis. The second secondary axis may be non-parallel with the second primary axis.

The robot comprises a power bus supplying power to the plurality of motors, such as the first primary motor, the first secondary motor, the second primary motor, and/or the second secondary motor.

The method for controlling the robot may comprise receiving information about a state of power of the power bus. The method may further comprise controlling operation of the plurality of motors to effectuate a desired movement of the robot, wherein controlling the operation of the plurality of motors is based on the information about the state of power on the power bus.

The robot may comprise one or more control units adapted to control the robot in accordance with the disclosed method. For example, the one or more control units may be adapted to control operation of the plurality of motors to effectuate the desired movement of the robot. The one or more control units may receive information about the state of power of the power bus, and the one or more control units may be adapted to control operation of the plurality of motors, or at least one or some of the plurality of motors, based on the information about the state of power on the power bus.

Thereby, the operation of the motors may be performed to handle, such as to decrease, excessive power on the power bus. Thereby reducing the likelihood that the power increases to a level, which may damage components of the robot. Furthermore handling excessive power on the power bus by varying the control of the motors may reduce the need or requirement for designated resistors in the system to take care of such excessive power.

The motor(s), such as the first primary motor, the first secondary motor, the second primary motor and/or the second secondary motor, may comprise a gear assembly, e.g. an integral gear, such as a strain wave gear. Hence, a motor in the present disclosure may be a gear motor.

The motor(s), such as the first primary motor, the first secondary motor, the second primary motor and/or the second secondary motor, may be permanent magnet AC motors. For example, each of the plurality of motors may be a permanent magnet AC motor.

In accordance with power on the power bus exceeding a predetermined threshold, one or more of the plurality of motors may be controlled to operate, such as to provide torque and/or movement, with a less optimal phase angle. Accordingly, the one or more control units may be adapted to, in accordance with the information about the state of power of the power bus being indicative of power on the power bus exceeding the predetermined threshold, control one or more of the plurality of motors to operate, such as to provide torque and/or movement, with the less optimal phase angle. A provided torque and/or movement of a motor may be determined based on the task and/or movement to be done by the robot. In some examples, the control units may control the one or more of the plurality of motors to position the joints in desired positions, and/or to move with desired velocities and/or accelerations. Based on such input, the motors may provide torques to effectuate the desired movement and/or torque. In some examples, some motors may not need to move, but may need to provide a torque in order not to move, e.g. to balance external forces on the joint.

Conversely, in accordance with power on the power bus not exceeding the predetermined threshold, the one or more of the plurality of motors may be controlled to operate, such as to provide torque and/or movement, with an optimal phase angle. Accordingly, the one or more control units may be adapted to, in accordance with the information about the state of power of the power bus being indicative of power on the power bus not exceeding the predetermined threshold, control the one or more of the plurality of motors to operate, such as to provide torque and/or movement, with the optimal phase angle.

Generally, the phase angle may be between a rotor magnetic field and a stator magnetic field of the respective motor. As most torque per ampere is achieved when the phase angle between the rotor magnetic field and the stator magnetic field of a motor is close to 90 degrees (e.g. between 89-91 degrees, such as substantially 90 degrees, such as 90 degrees), reducing or increasing the phase angle to a less optimal phase angle has the, in this context, advantageous effect that more power is used by the respective motor to provide desired torque, thereby working to decrease the excessive power on the power bus. The less optimal phase angle may differ from 90 degrees, e.g. by more than 1 degree or by more than 5 degrees.

The less optimal phase angle may differ from the optimal phase angle (e.g. 90 degrees) by a magnitude, which may be based on provided torque of the respective motor. For example, in a case where a motor is not providing any torque, the phase angle may differ by up to 90 degrees, e.g. having a phase angle between the rotor magnetic field and the stator magnetic field of 180 degrees, or close to 180 degrees. In another case where a motor is providing a greater torque, the phase angle may differ by a smaller magnitude, as even a minorly less optimal phase angle may sufficiently influence the efficiency of the motor when generating greater torque.

The less optimal phase angle may differ from the optimal phase angle (e.g. 90 degrees) by a magnitude, which is based on an amount of power on the power bus exceeding the predetermined threshold. For example, the magnitude may be proportional to the amount of power on the power bus exceeding the predetermined threshold. For example, the magnitude may be greater for higher amount of power on the power bus exceeding the predetermined threshold. For example, the magnitude may be increasing for increasing amount of power on the power bus exceeding the predetermined threshold. For example, in accordance with the amount of power on the power bus exceeding the predetermined threshold is a first amount, the less optimal phase angle may have a first angle deviating from the optimal phase angle (e.g. 90 degrees) by a first magnitude, and in accordance with the amount of power on the power bus exceeding the predetermined threshold is a second amount larger than the first amount, the less optimal phase angle may have a second angle deviating from the optimal phase angle (e.g. 90 degrees) by a second magnitude larger than the first magnitude.

In some examples, only some of the motors may be selected to handle the excessive power on the power bus. For example, in accordance with the power on the power bus exceeding the predetermined threshold, one or more selected motors of the plurality of motors may be selected. The one or more selected motors may be controlled to operate, such as to provide torque and/or movement, with the less optimal phase angle. For example, the one or more control units may be further adapted to, in accordance with the information about the state of power of the power bus being indicative of power on the power bus exceeding the predetermined threshold, select one or more selected motors of the plurality of motors, and control the one or more selected motors to operate, such as to provide torque and/or movement, with the less optimal phase angle.

The selection of the one or more selected motors of the plurality of motors may be based on one or more temperature signals. For example, the coldest motors may be selected, or the hottest motors may be not selected. The robot may comprise one or more temperature sensors. The one or more temperature sensors may be provided at the motors, or within their vicinities. In some examples, each of the joint assemblies may comprise a temperature sensor. The one or more control units may be adapted to receive one or more temperature sensor signals from the one or more temperature sensors. The one or more temperature sensor signals may be indicative of temperature of each of the plurality of motors and/or their vicinity. In some examples, the one or more temperature sensor signals may be indicative of temperature within each joint assembly. Selecting the one or more selected motors of the plurality of motors may be based on the one or more temperature sensor signals. For example, the one or more control units may be adapted to select the one or more selected motors of the plurality of motors based on the one or more temperature sensor signals.

In an example, in accordance with the one or more temperature sensor signals being indicative of a first temperature of the first primary motor and/or its vicinity is below a second temperature of the second primary motor and/or its vicinity, the first primary motor may be selected as a selected motor. In accordance with the one or more temperature sensor signals being indicative of the first temperature of the first primary motor and/or its vicinity is above the second temperature of the second primary motor and/or its vicinity, the second primary motor may be selected as the selected motor.

The motor(s), such as the first primary motor, the first secondary motor, the second primary motor and/or the second secondary motor, may have respective internal resistances. For example, each of the plurality of motors may have a respective internal resistance. For example, the first primary motor may have a first primary internal resistance, the first secondary motor may have a first secondary internal resistance, the second primary motor may have a second primary internal resistance, and/or the second secondary motor may have a second secondary internal resistance.

Selection of the one or more selected motors may be based on the internal resistances of the plurality of motors. For example, the one or more control units may be adapted to select the one or more selected motors of the plurality of motors based on the internal resistances of the plurality of motors. For example, a motor with a greater internal resistance may be selected over a motor with a smaller internal resistance. For example, in accordance with the first primary motor having a first primary internal resistance greater than a second primary internal resistance of the second primary motor, the first primary motor may be selected as the selected motor. Selection of the one or more selected motors may be a combination of both temperature and internal resistance.

The one or more control units may include a first primary control unit. The first primary motor may comprise the first primary control unit. The first primary control unit may be adapted to, in accordance with the information about the state of power of the power bus being indicative of power on the power bus exceeding a predetermined threshold (which may be a specific threshold for the first primary motor), control the first primary motor to operate, such as to provide torque and/or movement, with a less optimal phase angle between a rotor magnetic field and a stator magnetic field of the first primary motor.

The one or more control units may include a first secondary control unit. The first secondary motor may comprise the first secondary control unit. The first secondary control unit may be adapted to, in accordance with the information about the state of power of the power bus being indicative of power on the power bus exceeding a predetermined threshold (which may be a specific threshold for the first secondary motor), control the first secondary motor to operate, such as to provide torque and/or movement, with a less optimal phase angle between a rotor magnetic field and a stator magnetic field of the first secondary motor.

The one or more control units may include a second primary control unit. The second primary motor may comprise the second primary control unit. The second primary control unit may be adapted to, in accordance with the information about the state of power of the power bus being indicative of power on the power bus exceeding a predetermined threshold (which may be a specific threshold for the second primary motor), control the second primary motor to operate, such as to provide torque and/or movement, with a less optimal phase angle between a rotor magnetic field and a stator magnetic field of the second primary motor.

The one or more control units may include a second secondary control unit. The second secondary motor may comprise the second secondary control unit. The second secondary control unit may be adapted to, in accordance with the information about the state of power of the power bus being indicative of power on the power bus exceeding a predetermined threshold (which may be a specific threshold for the second secondary motor), control the second secondary motor to operate, such as to provide torque and/or movement, with a less optimal phase angle between a rotor magnetic field and a stator magnetic field of the second secondary motor.

A braking operation of one or more of the plurality of motors may be controlled by cyclically switching between a short circuit mode and a normal control mode. For example, the one or more control units may be adapted to control a braking operation of one or more of the plurality of motors by cyclically switching between a short circuit mode and a normal control mode. In the normal control mode, the motor may be operated to provide a torque, e.g. based on a desired movement, which may result in a braking action with the result of the motor generating power to the power bus. By short circuiting the phases of a motor, the motor may, in an alternative way, provide a braking action of any movement of the motor. Utilizing a short circuit mode may reduce the need for handling excessive power on the power bus and may supplement the described solution involving operating one or more of the motors to work less efficiently.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating an exemplary joint assembly, and
Fig. 3 shows an exemplary block diagram of some components of an exemplary robot.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

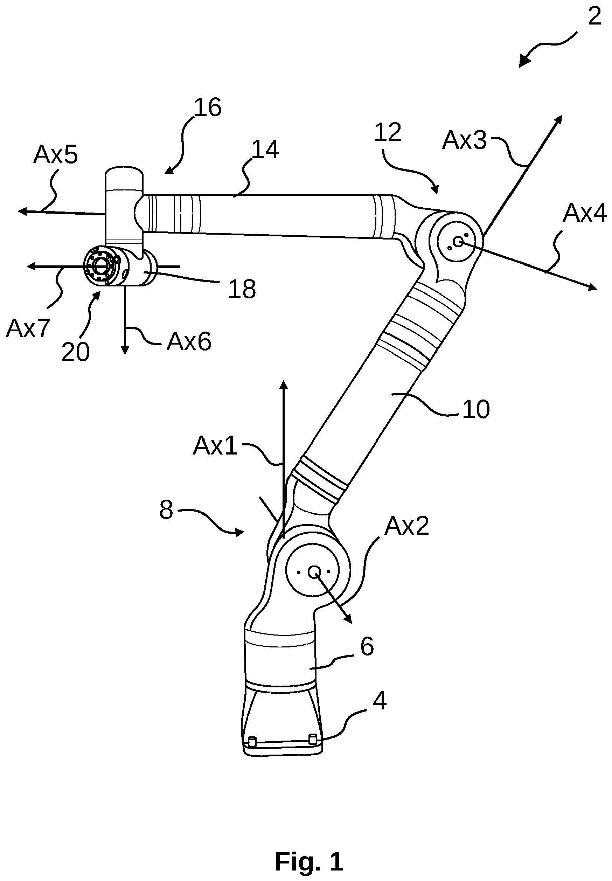

Fig. 1 is a schematic diagram illustrating an exemplary robot 2, which in the present example is a robotic arm, more particularly, a seven-axis robotic arm.

The robot 2 comprises a plurality of joint assemblies, including a first joint assembly 8, a second joint assembly 12, a third joint assembly 16, and a fourth joint assembly 20. In other examples, the robot may comprise fewer or more joint assemblies. For example, the robot 2 may, in another configuration, comprise only one joint assembly, such as the first joint assembly 8.

The robot 2 comprises a plurality of links, including a first link 6, a second link 10, a third link 14, and a fourth link 18. The links extends between the joint assemblies. For example, the first link 6 extends between a base 4 of the robot 2 and the first joint assembly 8. The second link 10 extends between the first joint assembly 8 and the second joint assembly 12. The third link 14 extends between the second joint assembly 12 and the third joint assembly 16. The fourth link 18 extends between the third joint assembly 16 and the fourth joint assembly 20.

Each of the joint assemblies 8, 12, 16, 20 are adapted to rotate one or more respective links relative to the joint assembly around an axis. For example, the first joint assembly 8 is adapted to rotate the first link 6 relative to the first joint assembly 8 around a first axis Ax1. The first joint assembly 8 is adapted to rotate the second link 10 relative to the first joint assembly 8 around a second axis Ax2. The second axis Ax2 is non-parallel with the first axis Ax1. The second joint assembly 12 is adapted to rotate the second link 10 relative to the second joint assembly 12 around a third axis Ax3. The second joint assembly 12 is adapted to rotate the third link 14 relative to the second joint assembly 12 around a fourth axis Ax4. The fourth axis Ax4 is non-parallel with the third axis Ax3. The third joint assembly 16 is adapted to rotate the third link 14 relative to the third joint assembly 16 around a fifth axis Ax5. The third joint assembly 16 is adapted to rotate the fourth link 18 relative to the third joint assembly 16 around a sixth axis Ax6. The sixth axis Ax6 is non-parallel with the fifth axis Ax5. The fourth joint assembly 20 is adapted to rotate the fourth link 18 relative to the fourth joint assembly 20 around a seventh axis Ax7. The robot 2 may be put in some configurations where none of the seven axes Ax1-Ax7 are parallel. However, in some other configurations two or more of the seven axes may be parallel.

Although being described in relation to a robot 2 being operable relative to seven axes, the present disclosure may alternatively be applied to a robot having only six axes, or even fewer axes. For example, with respect to the example illustrated in Fig. 1, movement around the third axis Ax3, may be omitted, to obtain a robot operable relative to six axes. In such situation, the first joint assembly 8 may be adapted to rotate the first link 6 relative to the first joint assembly 8 around the first axis Ax1 and to rotate the second link 10 relative to the first joint assembly 8 around the second axis Ax2. The second joint assembly 12 may be adapted to rotate the third link 14 relative to the second joint assembly 12 around the fourth axis Ax4 and to rotate the third link 14 relative to the second joint assembly 12 around the fifth axis Ax5. The third joint assembly 16 may be adapted to rotate the third link 14 relative to the third joint assembly 16 around the sixth axis Ax6 and to rotate the fourth link 18 relative to the third joint assembly 16 around the seventh axis Ax7. The fourth joint assembly 20 may be omitted. Hence, a robot operable relative to six axes may be realised with only three joint assemblies according to the present disclosure.

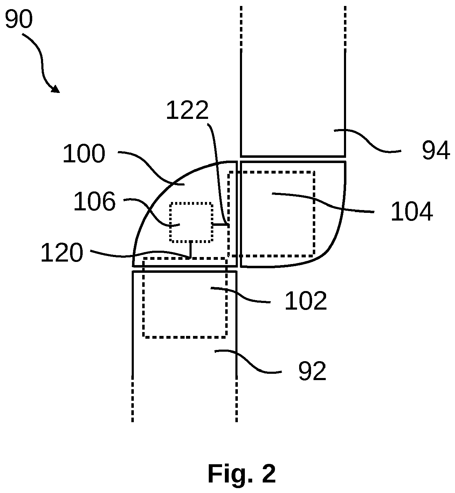

Fig. 2 is a schematic diagram illustrating an exemplary joint assembly 90, which may be any of the first, second, or third joint assemblies 8, 12, 16 as shown in Fig. 1.

The joint assembly 90 comprises a joint housing 100. The joint assembly 90 comprises a primary motor 102 connecting the joint housing 100 with a primary link 92 (e.g. the first link 6, the second link 10, or the third link 14 of Fig. 1). The primary motor 102 is adapted to rotate the primary link 92 relative to the joint housing 100 around a primary axis (e.g. the first axis Ax1, the third axis Ax3, the fifth axis Ax5, or the seventh axis Ax7 of Fig. 1). The illustrated joint assembly 90 comprises an optional secondary motor 104 connecting the joint housing 100 with a secondary link 94 (e.g. the second link 10, the third link 14, or the fourth link 18 of Fig. 1). The secondary motor 104 is adapted to rotate the secondary link 94 relative to the joint housing 100 around a secondary axis (e.g. the second axis Ax2, the fourth axis Ax4, or the sixth axis Ax6 of Fig. 1). The joint assembly 90 comprises circuitry 106, e.g. a first PCB, accommodated in the joint housing 100. The circuitry 106 is adapted to control the primary motor 102 and the secondary motor 104. The primary motor 102 and/or the secondary motor 104 may be a permanent magnet AC motor. Furthermore, the primary motor 102 and/or the secondary motor 104 may comprise a gear assembly, e.g. an integral gear, such as a strain wave gear. Hence, the primary motor 102 and/or the secondary motor 104 may be a gear motor.

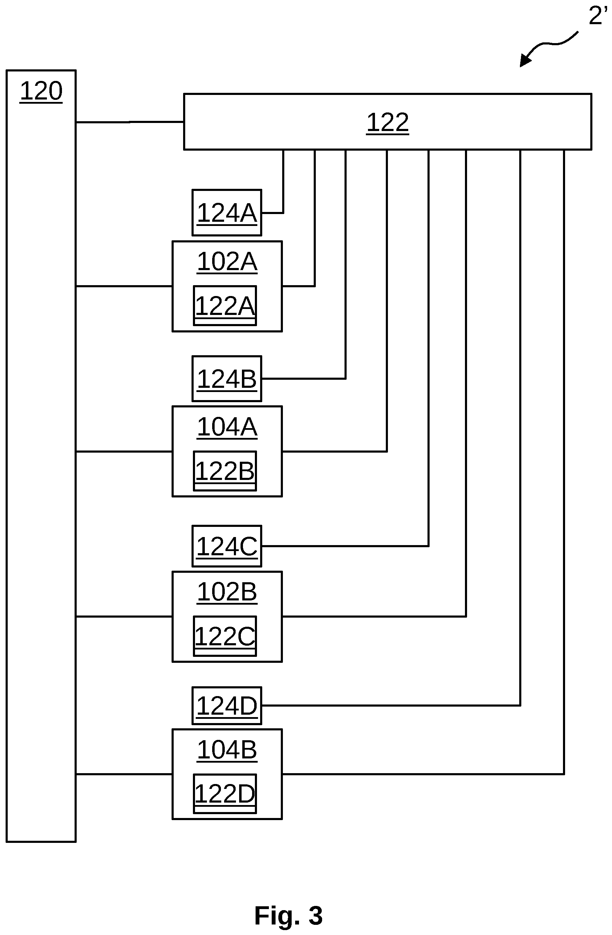

Fig. 3 shows an exemplary block diagram of some components of an exemplary robot 2', such as the robot 2 of Fig. 1. As illustrated, the robot 2' comprises a plurality of motors including a first primary motor 102A and a second primary motor 102B. As also illustrated, the plurality of motors may comprise a first secondary motor 104A and/or a second secondary motor 104B.

The plurality of motors may form part of one or more joint assemblies of the robot 2', as explained in relation to Fig. 2. For example, the first primary motor 102A and the optional first secondary motor 104A may form part of a first joint assembly of the robot 2'. Similarly, the second primary motor 102B and the optional second secondary motor 104B may form part of a second joint assembly of the robot 2'.

The first primary motor 102A may connect a first joint housing of the first joint assembly with a first primary link. The first primary motor 102A may be adapted to rotate the first primary link relative to the first joint housing around a first primary axis, as explained in relation to Fig. 2.

The first secondary motor 104A may connect the first joint housing with a first secondary link. The first secondary motor 104A may be adapted to rotate the first secondary link relative to the first joint housing around a first secondary axis, as explained in relation to Fig. 2.

The second primary motor 102B may connect a second joint housing of the second joint assembly with a second primary link. The second primary motor 102B may be adapted to rotate the second primary link relative to the second joint housing around a second primary axis, as explained in relation to Fig. 2.

The second secondary motor 104B may connect the second joint housing with a second secondary link. The second secondary motor 104B may be adapted to rotate the second secondary link relative to the second joint housing around a second secondary axis, as explained in relation to Fig. 2.

The robot 2' comprises a power bus 120 supplying power to each of the plurality of motors 102A, 102B, 104A, 104B, as well as other components in the robot 2'. The power bus 120 may supply a DC voltage, e.g. at 48 volts. As mentioned previously, the motors 102A, 102B, 104A, 104B may be AC motors, and may comprise control circuits controlling alternating currents in the stator of the motor to drive the motor based on a supplied DC voltage. Alternatively, the power bus 120 may supply AC voltage, e.g. a three phase AC voltage.

The robot 2' comprises one or more control units 122, 122A, 122B, 122C, 122D. In the present example, the robot 2' comprises a central control unit 122. In some examples, as also illustrated, the robot 2' may additionally or alternatively comprise designated control units 122A, 122B, 122C, 122D for some or each of the motors 102A, 102B, 104A, 104B. In the example where the robot 2' comprises a plurality of control units 122, 122A, 122B, 122C, 122D, these may communicate with each other.

The control unit 122 may be adapted to control operation of the motors 102A, 102B, 104A, 104B, to effectuate a desired movement of the robot. For example, the control unit 122 may be adapted to instruct the first primary motor 102A to provide a first primary movement and/or torque, which may result in the first primary motor 102A providing a first primary torque, and/or to instruct the second primary motor 102B to provide a second primary movement and/or torque, which may result in the second primary motor 102B providing a second primary torque, etc. The control unit 122 may further be adapted to receive information about a state of power of the power bus 120. For example, the control unit 122 may receive information about the voltage on the power bus 120. In some instances, the power bus 120 may have a voltage corresponding to a nominal voltage required to drive the robot, including the motors 102A, 102B, 104A, 104B. However, if some of the motors are slowing down an ongoing movement, those motors 102A, 102B, 104A, 104B may, by their rotors continued rotation caused by the ongoing movement, induce a current in the stator windings and effectively supply power to the power bus 120. Thereby, the voltage on the power bus 120 may rise. To safeguard the components of the robot 2', the voltage on the power bus 120 should then be normalised.

The motors 102A, 102B, 104A, 104B may be controlled by varying a stator magnetic field of a stator of the motor thereby attracting/repelling a differing rotor magnetic field of a rotor of the motor. The rotor magnetic field may be provided by one or more permanent magnets. The stator magnetic field may be provided by current flowing in a plurality of stator windings. Thereby the stator may provide for a stator magnetomotive force attracting/repulsing the rotor magnetic field. An optimal phase angle between the rotor magnetic field and the stator magnetic field may have a magnitude between 89-91 degrees, such as substantially 90 degrees, such as 90 degrees. The optimal phase angle may provide for the motor generating maximum torque per ampere.

As explained above, in cases where the power bus 120 holds too much power, e.g. where the voltage is too high, it may be necessary to reduce the power on the power bus 120. According to the present disclosure one or more of the motors may be operated according to the state of power on the power bus. Hence. the control unit 122 may be adapted to control operation of one or more of the motors 102A, 102B, 104A, 104B, based on the information about the state of power on the power bus 120.

For example, the control unit 122 may be adapted to, in accordance with the information about the state of power of the power bus 120 being indicative of power on the power bus 120 exceeding a predetermined threshold, control one or more of the motors 102A, 102B, 104A, 104B to operate with a less optimal phase angle between the rotor magnetic field and the stator magnetic field. Hence, the control unit 122 may control one or more of the motors 102A, 102B, 104A, 104B to work less efficient in order to decrease the power on the power bus 120.

Conversely, the control unit 122 may be adapted to, in accordance with the information about the state of power of the power bus 120 being indicative of power on the power bus 120 not exceeding the predetermined threshold, control one or more of the motors 102A, 102B, 104A, 104B to operate with an optimal phase angle between the rotor magnetic field and the stator magnetic field. For example, the optimal phase angle between the rotor magnetic field and the stator magnetic field may have a magnitude between 89-91 degrees, such as substantially 90 degrees, such as 90 degrees.

The predetermined threshold may, for example, be 50 volts, in the example of the power bus being meant to provide 48 volts.

In the case of controlling a motor to operate with a less than optimal phase angle, the less optimal phase angle may differ from the optimal phase angle, e.g. 90 degrees, by more than 1 degree or by more than 5 degrees. In some examples, the less optimal phase angle may differ from the optimal phase angle, e.g. 90 degrees, by more than 45 degree or by more than 80 degrees. In some examples, e.g. if the motor is not to provide any torque, the less optimal phase angle may differ from the optimal phase angle, e.g. 90 degrees, by 90 degrees, i.e. in such exemplary situation, the phase angle between the rotor magnetic field and the stator magnetic field may be substantially 180 degrees, such as 180 degrees. Thus, in some examples, the less optimal phase angle may differ from the optimal phase angle, e.g. 90 degrees, by a magnitude, which is based on provided torque of the respective motor.

In some examples, the less optimal phase angle may differ from the optimal phase angle, e.g. 90 degrees, by a magnitude, which is based on an amount of power on the power bus 120 exceeding the predetermined threshold. For example, the magnitude of the difference between the less optimal phase angle and the optimal phase angle may be increasing for increasing amount of power on the power bus exceeding the predetermined threshold. Hence, the more excessive power on the power bus 120, the more is the less optimal phase angle set to differ from the optimal phase angle. The one or more of the motors 102A, 102B, 104A, 104B may be controlled to work the least efficient when the amount of power on the power bus 120 is exceeding the predetermined threshold by a large amount and only a little less efficient when the amount of power on the power bus 120 is exceeding the predetermined threshold by a small amount.

The control unit 122 may further be adapted to, e.g. in accordance with the information about the state of power of the power bus being indicative of power on the power bus 120 exceeding the predetermined threshold, select one or more selected motors of the motors 102A, 102B, 104A, 104B, and control the one or more selected motors to operate with the less optimal phase angle. Thus, not all of the motors 102A, 102B, 104A, 104B need necessarily to be controlled to operate with the less optimal phase angle. Instead the control unit 122 may be able to select one or more of the motors 102A, 102B, 104A, 104B to handle the excess power on the power bus 120.

For example, motors may be selected based on temperature, such as to use the coldest motor(s) or joint assembly/assemblies to handle the excess power, and/or to avoid additionally heating already hot motors and/or joint assemblies by making them work less efficient. Thus, the robot 2' may comprise one or more temperature sensors 124A, 124B, 124C, 124D. In the illustrated example, the robot 2' comprises a temperature sensor 124A, 124B, 124C, 124D for each of the motors. 102A, 102B, 104A, 104B. However, in another examples, a temperature sensor may be provided in each joint assembly. For example, a single temperature sensor may be provided for the first primary motor 102A and the first secondary motor 104A of the same primary joint. The control unit 122 may be adapted to receive one or more temperature sensor signals from the temperature sensors 124A, 124B, 124C, 124D. As mentioned, the temperature sensors 124A, 124B, 124C, 124D may be provided at each of the motors or in the vicinity of the motors, e.g. in the joint assemblies. Thus, the temperature sensor signals may be indicative of temperature of each of the motors 102A, 102B, 104A, 104B and/or their vicinity, e.g. within their respective joint assembly. The control unit 122 may thereby be adapted to select the one or more selected motors of the motors 102A, 102B, 104A, 104B based on the temperature sensor signals. For example, the control unit 122 may be adapted to select the coldest or the two coldest motors or the motors of the coldest joint assembly.

Alternatively or additionally, the motors may be selected based on their ability to consume power, e.g. based on their internal resistance. Each of the motors 102A, 102B, 104A, 104B may have an internal resistance. The selected one or more of the motors 102A, 102B, 104A, 104B may be selected based on their internal resistance. Accordingly, the control unit 122 may be adapted to select the one or more selected motors of the motors 102A, 102B, 104A, 104B based on their internal resistances. For example, the control unit 122 may be adapted to select the motor or a number of motors with the largest internal resistance. In some examples, the internal resistance of the motors and the temperature information may both be used to select the one or more of the motors 102A, 102B, 104A, 104B to handle the excess power on the power bus 120.

Alternatively or additionally to the above, one or more of the motors 102A, 102B, 104A, 104B may comprise designated control units 122A, 122B, 122C, 122D, as also illustrated. For example, as illustrated, the first primary motor 102A may comprise a first primary control unit 122A, the optional first secondary motor 104A may comprise a first secondary control unit 122B, the second primary motor 102B may comprise a second primary control unit 122C, and the optional second secondary motor 104B may comprise a second secondary control unit 122D. In some examples not all of the motors 102A, 102B, 104A, 104B comprise such designated control unit. Furthermore, a single control unit, e.g. the first primary control unit 122A, may be a common control unit for a plurality of motors, e.g. both the first primary motor 102A and the first secondary motor 104A. The circuitry 106, as illustrated in Fig. 2, may be such common control unit for a plurality of motors, e.g. the primary motor 102 and the secondary motor 104.

The control units 122A, 122B, 122C, 122D, are adapted to, e.g. in combination with the central control unit 122, control operation of the motors 102A, 102B, 104A, 104B to effectuate a desired movement of the robot, e.g. by controlling the motors to provide certain designated movements and/or torques to effectuate the desired movement. The designated control units 122A, 122B, 122C, 122D may contribute to effectuate the desired movement of the robot based on designated inputs from the central control unit 122.

The control units 122A, 122B, 122C, 122D may receive information about the state of power of the power bus 120. The control units 122A, 122B, 122C, 122D may be adapted to control operation of the motors 102A, 102B, 104A, 104B based on the information about the state of power on the power bus. For example, the first primary control unit 122A may be adapted to, in accordance with the information about the state of power of the power bus 120 being indicative of power on the power bus 120 exceeding a predetermined threshold, control the first primary motor 102A to operate with a less optimal phase angle, as explained previously. Thereby, the first primary motor 102A, by comprising a designated control unit 122A receiving information about the state of power of the power bus, may independently be able to contribute to the handling of excessive power on the power bus 120.

Similarly, the first secondary control unit 122B may be adapted to, in accordance with the information about the state of power of the power bus 120 being indicative of power on the power bus 120 exceeding a predetermined threshold (which may be the same or a different threshold than the threshold employed by the first primary control unit 122A), control the first secondary motor 104A to operate with a less optimal phase angle.

Similarly, the second primary control unit 122C may be adapted to, in accordance with the information about the state of power of the power bus 120 being indicative of power on the power bus 120 exceeding a predetermined threshold (which may be the same or a different threshold than the threshold employed by the first primary control unit 122A and/or the first secondary control unit 122B), control the second primary motor 102B to operate with a less optimal phase angle.

Similarly, the second secondary control unit 122D may be adapted to, in accordance with the information about the state of power of the power bus 120 being indicative of power on the power bus 120 exceeding a predetermined threshold (which may be the same or a different threshold than the threshold employed by the first primary control unit 122A, the first secondary control unit 122B and/or the second primary control unit 122C), control the second secondary motor 104B to operate with a less optimal phase angle.

The less optimal phase angle may differ between the motors. For example, as explained previously, the less optimal phase angle may be dependent on the torque generated by the respective motor.

As mentioned previously, one or more of the motors 102A, 102B, 104A, 104B may be selected to operate with the less optimal phase angle, in order to handle excessive power on the power bus, e.g. based on temperature and/or internal resistance. As an alternative or supplement to the previously described selection performed by the central control unit 122, a similar selection may be performed by the designated control units 122A, 122B, 122C, 122D. For example, the designated control units 122A, 122B, 122C, 122D may communicate with each other to collectively select the motors to use for handling the excessive power on the power bus 120. In some examples a designated control unit of the plurality of designated control units 122A, 122B, 122C, 122D, may be specified to select the selected one or more of the motors to operate with the less optimal phase angle.

In some examples, the designated control units 122A, 122B, 122C, 122D, may be adapted to individually determine whether to operate in order to handle excessive power on the power bus 120. For example, a designated control unit 122A, 122B, 122C, 122D, may determine whether and by how much to control the respective motor 102A, 102B, 104A, 104B to operate with a less optimal phase angle. Such implementation may have the advantage, that coordination between the control units and/or motors may be unnecessary. For example, a control unit 122A, 122B, 122C, 122D, may control operation of its respective motor 102A, 102B, 104A, 104B based on the information about the state of power on the power bus 120, e.g. in combination with a respective temperature sensor signal from a respective temperature sensor 124A, 124B, 124C, 124D, and/or an internal resistance of the respective motor 102A, 102B, 104A, 104B. Hence, it is noted that, although not specifically illustrated, the control units 122A, 122B, 122C, 122D may receive respective temperature sensor signals from the respective temperature sensors 124A, 124B, 124C, 124D. For example, the first primary control unit 122A may receive a temperature sensor signal from the first primary temperature sensor 124A. The first secondary control unit 122B may receive a temperature sensor signal from the first secondary temperature sensor 124B. The second primary control unit 122C may receive a temperature sensor signal from the second primary temperature sensor 124C. The second secondary control unit 122D may receive a temperature sensor signal from the second secondary temperature sensor 124D.

In some examples, one or more of the control units 122, 122A, 122B, 122C, 122D may be adapted to control a braking operation of one or more of the motors 102A, 102B, 104A, 104B by cyclically switching between a short circuit mode and a normal control mode. In the normal control mode, the motor may be operated to provide a movement and/or torque, which may result in a braking action with the result of the motor generating power to the power bus. By short circuiting the phases of a motor, the motor may provide a braking action of any movement of the motor, as rotation of the rotor will induce a current in the stator, which will result in an opposite acting magnetic force on the permanent magnet rotor, without the motor generating power to the power bus. However, such method may result in extensive heating of the motor, as the power generated by the motor is converted to heat within the stator windings. Hence, to safeguard the motor from overheating, the short circuit mode may be employed only cyclically, to allow some of the induced current to flow to the power bus, while other is transformed to heat in the stator windings. Thus, utilizing a short circuit mode may reduce the need for handling excessive power on the power bus, and therefore may be employed to supplement the solution involving operating one or more of the motors 102A, 102B, 104A, 104B to work less efficiently.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 2: robot
- 4: base
- 6: first link
- 8: first joint assembly
- 10: second link
- 12: second joint assembly
- 14: third link
- 16: third joint assembly
- 18: fourth link
- 20: fourth joint assembly
- 90: joint assembly
- 92: primary link
- 94: secondary link
- 100: joint housing
- 102: primary motor
- 102A: first primary motor
- 102B: second primary motor
- 104: secondary motor
- 104A: first secondary motor
- 104B: second secondary motor
- 106: circuitry
- 120: power bus
- 122, 122A, 122B, 122C, 122D: control unit
- 124A, 124B, 124C, 124D: temperature sensor

- Ax1: first axis
- Ax2: second axis
- Ax3: third axis
- Ax4: fourth axis
- Ax5: fifth axis
- Ax6: sixth axis
- Ax7: seventh axis

## Claims

1. A robot comprising a plurality of joint assemblies including a first joint assembly and a second joint assembly, the robot further comprises a plurality of motors including a first primary motor and a second primary motor,
the first joint assembly comprising a first joint housing and the first primary motor connecting the first joint housing with a first primary link, the first primary motor being adapted to rotate the first primary link relative to the first joint housing around a first primary axis,
the second joint assembly comprising a second joint housing and the second primary motor connecting the second joint housing with a second primary link, the second primary motor being adapted to rotate the second primary link relative to the second joint housing around a second primary axis,
the robot comprising a power bus supplying power to the plurality of motors,
the robot comprising one or more control units adapted to control operation of the plurality of motors to effectuate a desired movement of the robot, the one or more control units receiving information about a state of power of the power bus, and wherein the one or more control units are adapted to control operation of at least one of the plurality of motors based on the information about the state of power on the power bus.

2. The robot according to any of the preceding claims, wherein each of the plurality of motors is a permanent magnet AC motor.

3. The robot according to any of the preceding claims, wherein the one or more control units are adapted to, in accordance with the information about the state of power of the power bus being indicative of power on the power bus exceeding a predetermined threshold, control one or more of the plurality of motors to operate with a less optimal phase angle between a rotor magnetic field and a stator magnetic field.

4. The robot according to claim 3, wherein the less optimal phase angle differs from 90 degrees, e.g. by more than 1 degree or by more than 5 degrees.

5. The robot according to any of claims 3-4, wherein the less optimal phase angle differs from 90 degrees by a magnitude, which is based on provided torque of the respective motor.

6. The robot according to any of claims 3-5, wherein the less optimal phase angle differs from 90 degrees by a magnitude, which is based on an amount of power on the power bus exceeding the predetermined threshold.

7. The robot according to any of claims 3-6, wherein the one or more control units are further adapted to, in accordance with the information about the state of power of the power bus being indicative of power on the power bus exceeding the predetermined threshold, select one or more selected motors of the plurality of motors, and control the one or more selected motors to operate with the less optimal phase angle between the rotor magnetic field and the stator magnetic field.

8. The robot according to claim 7, comprising one or more temperature sensors, and wherein the one or more control units are adapted to receive one or more temperature sensor signals from the one or more temperature sensors indicative of temperature of each of the plurality of motors and/or their vicinity,
wherein the one or more control units are adapted to select the one or more selected motors of the plurality of motors based on the one or more temperature sensor signals.

9. The robot according to any of claims 7-8, wherein each of the plurality of motors has an internal resistance,
wherein the one or more control units are adapted to select the one or more selected motors of the plurality of motors based on the internal resistances of the plurality of motors.

10. The robot according to any of the preceding claims, wherein the one or more control units are adapted to, in accordance with the information about the state of power of the power bus being indicative of power on the power bus not exceeding a predetermined threshold, control one or more of the plurality of motors to operate with an optimal phase angle between a rotor magnetic field and a stator magnetic field, optionally wherein the optimal phase angle is between 89-91 degrees, such as substantially 90 degrees, such as 90 degrees.

11. The robot according to any of the preceding claims, wherein the first joint assembly comprises a first secondary motor connecting the first joint housing with a first secondary link, the first secondary motor being adapted to rotate the first secondary link relative to the first joint housing around a first secondary axis non-parallel with the first primary axis.

12. The robot according to any of preceding claims, wherein the plurality of motors are at least six motors, such as seven motors.

13. The robot according to any of preceding claims, wherein the one or more control units includes a first primary control unit, and the first primary motor comprises the first primary control unit, and wherein the first primary control unit is adapted to, in accordance with the information about the state of power of the power bus being indicative of power on the power bus exceeding a predetermined threshold, control the first primary motor to operate with a less optimal phase angle between a rotor magnetic field and a stator magnetic field.

14. The robot according to any of preceding claims, wherein the one or more control units is adapted to control a braking operation of one or more of the plurality of motors by cyclically switching between a short circuit mode and a normal control mode.

15. Method for controlling a robot, the robot comprising a plurality of joint assemblies including a first joint assembly and a second joint assembly, the robot further comprising a plurality of motors, the robot comprising a power bus supplying power to the plurality of motors, the method comprising:
- receiving information about a state of power of the power bus, and
- controlling operation of the plurality of motors to effectuate a desired movement of the robot, wherein controlling the operation of the plurality of motors is based on the information about the state of power on the power bus.
